# EUROPEAN PATENT SPECIFICATION

(11) **EP 2 468 590 B1**
(45) Date of publication and mention of the grant of the patent: **28.08.2013**
(21) Application number: 11191772.0
(22) Date of filing: 02.12.2011
(51) Int. Cl.: B60T 7/08, B60T 7/10, H01H 23/06, H01H 23/26

(54) **Control switch for a vehicular parking brake**
Steuerschalter für eine Fahrzeugparkbremse
Commutateur de commande pour frein à main de véhicule

(30) Priority: 23.12.2010 IT TO20101046
(43) Date of publication of application: 27.06.2012
(73) Proprietor: Bitron S.p.A., 10122 Torino (TO) (IT)
(72) Inventor: Bono, Michelangelo, 12020 Rossana (CN) (IT)
(74) Representative: Di Gennaro, Sergio

(56) References cited:
- EP-A1- 2 164 085
- EP-A2- 1 615 249
- DE-A1- 19 705 068
- GB-A- 2 374 981
- US-A- 4 340 791

## Description

The present invention relates to an electric control switch for a vehicular parking brake, commonly also called handbrake, of the electronic type.

Mechanical parking brakes applied to vehicles such as cars, trucks, campers, etc. are known which can be controlled through a lever in order to brake or release a parked vehicle.

Electronic parking brakes are also known, which can be controlled through one or more electric/electronic switches adapted to activate/deactivate a vehicle's brakes, so as to brake/release the parked vehicle.

Such switches are made by using microswitches having special characteristics in terms of electric contact stroke and switching time.

Such microswitches are actuated by thrust elements integral with the movable or horizontally-pivoted key acted upon by the user.

Said thrust elements act upon suitable inclined planes performing the function of position markers, so that, after the key has been operated by the user, it can return to an idle position.

Although this solution appears to be quite simple, it is difficult to ensure that all the components of said switch guarantee an adequate level of safety as far as command activation and deactivation are concerned.

The main difficulties relate to the limited stroke of said horizontally-pivoted switches, due to both aesthetical and ergonomical reasons, which often does not ensure a correct switching of the microswitch.

It's known from European patent application EP2164085 A1, a fast snap multiple contact switch for low powers, having at least a module with at least a couple of contacts an operating mechanism for permitting the switching of the plurality of contacts. The switch comprises a first snapping mean and a second snapping mean mutually rotating around a pivot, being capable of preventing said first contact from switching position without said second contact of the same module having to switch.

It's also known from Unites State patent application US4340791 a rocket switch which is connected to an actuator, and loosely received in a recess, having a rectangular shape similar to that of the recess.

The present invention aims at solving the above-mentioned problems by providing a switch wherein a rod is used to actively operate microswitches through the interposition of an actuator.

One aspect of the present invention relates to a control switch for a vehicular parking brake having the features set out in the appended claim 1.

Accessory features of the present invention are set forth in the appended dependent claims.

The features and advantages of said switch will become more apparent from the following description of one embodiment thereof with reference to the annexed drawings, wherein:
- Fig. 1 is a sectional view of the switch according to the present invention;
- Fig. 2 is an exploded view of the switch of Fig. 1;
- Figs. 3A and 3B are two perspective views of the switch of Fig. 1; more specifically, Fig. 3A shows a sectional perspective rear side view of the switch, whereas Fig. 3B shows a sectional front side view of the switch;
- Figs. 4A and 4B show the switch according to the present invention in PUSH configuration (Fig. 4A) and in PULL configuration (Fig. 4B), respectively.

With reference to the above-listed figures, the control switch for a vehicular parking brake comprises a key 2 secured to a housing structure 3, so that it can rotate, preferably horizontally, about a fulcrum "0", a rod 4 secured to one end of key 2 and moving integrally therewith, so that it can slide along an axis "X" of key 2, countered by at least one elastic means 41.

Said housing structure 3 comprises at least one flared structure comprising at least one inclined contact plane 31, and is fixed onto an electronic circuit 5 comprising at least one electronic push-button 51.

Said switch comprises at least one actuator 6 positioned near the flared structure comprised in housing structure 3, on which said rod 4 slides.

Rod 4 comprises a contact portion 43, located at the free end thereof.

Said actuator 6 is so positioned that it can be rotated about a fulcrum "T" by acting upon said push-button 51, following the action of rod 4 upon said actuator 6.

Said switch can essentially take three operating configurations:
- an idle configuration, wherein the axis "X" of key 2 is substantially parallel to an axis "Z" of the switch;
- an activation, or push, configuration, wherein key 2 is tilted, preferably forwards, so as to move rod 4 and actuate the brake control;
- a deactivation, or pull, configuration, wherein key 2 is tilted in the direction opposite to that of the push configuration, preferably backwards, so as to move rod 4 and deactivate the brake control.

The switching from the idle configuration to either one of the other configurations of the switch requires the intervention of the user, who must exert a force onto said key 2, e.g. along an axis parallel to axis "Z" of the switch.

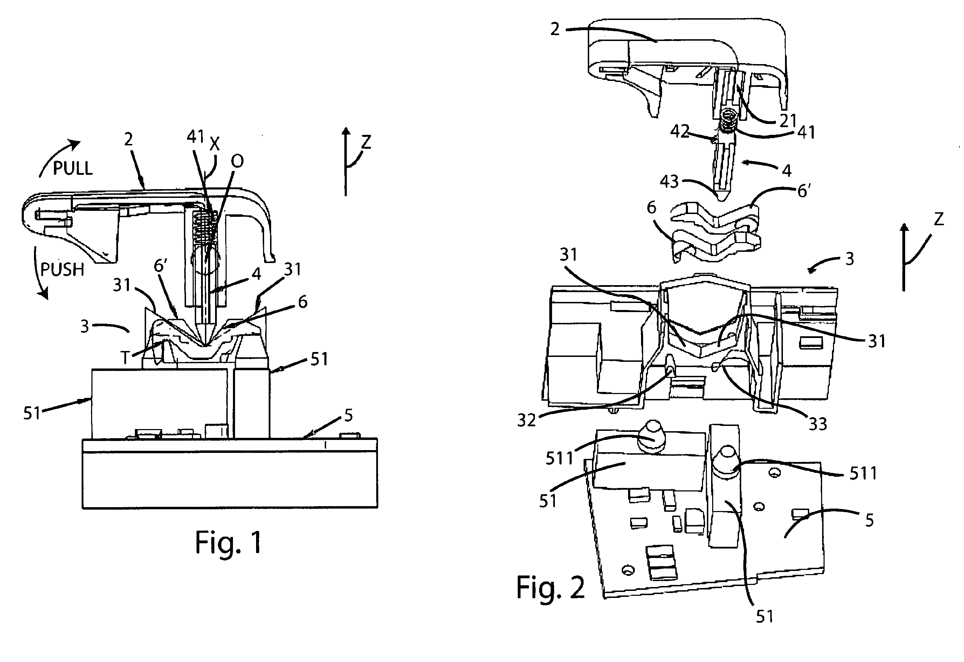

As soon as the user stops applying force onto key 2, the latter will return automatically to the idle configuration. As shown in Fig. 1, when key 2 is tilted in order to switch from the idle configuration to another operating configuration, key 2 rotates about fulcrum "O", thereby dragging along rod 4 integral therewith.

As rod 4 is moving, contact portion 43 slides on inclined contact plane 31, since rod 4 is countered by an elastic means 41.

Along the stroke of rod 4, contact portion 43 intercepts actuator 6, thus causing it to rotate about respective fulcrum "T".

In its turn, actuator 6 thus intercepted acts upon corresponding push-button 51, thereby causing the electric switching.

When key 2 is released, the switch according to the present invention returns automatically to the idle operating configuration.

When the switch is in the idle operating configuration, actuator 6 no longer acts upon the corresponding push-button, thus avoiding the risk of unintentional switching.

As shown in Fig. 2, in this embodiment the switch comprises two electric push-buttons 51, each comprising at least one contact dome 511, preferably made of silicone-based material, e.g. arranged perpendicular to each other, and fixed onto electronic circuit 5, which may be, for example, a printed circuit board.

Contact dome 511 has elastic properties which allow it to recover its initial shape after having been squeezed and/or deformed.

Said switch further comprises two actuators 6 and 6', arranged parallel and opposite to each other.

In particular, in a preferred embodiment each actuator 6 has a first support portion adapted to be positioned at fulcrum "T" about which it rotates, a second flared portion, secured at one end to the first support portion and comprising two opposite inclined planes, a third actuation portion, connected to the second flared portion and adapted to act directly upon contact dome 511 of push-button 51.

Preferably, at least one inclined plane comprised in actuator 6 is steeper than contact plane 31 comprised in the flared structure; furthermore, said opposite inclined planes have different slope and length, wherein at least one inclined plane has substantially the same slope as contact plane 31.

In particular, the inclined plane near the first support portion of actuator 6 is less inclined than the inclined plane near the third actuation portion of same actuator 6. In the embodiment shown in Fig. 2, the housing structure comprises said flared structure, which in turn comprises at least two inclined contact planes 31 opposite to each other, thus creating a symmetrical flared structure.

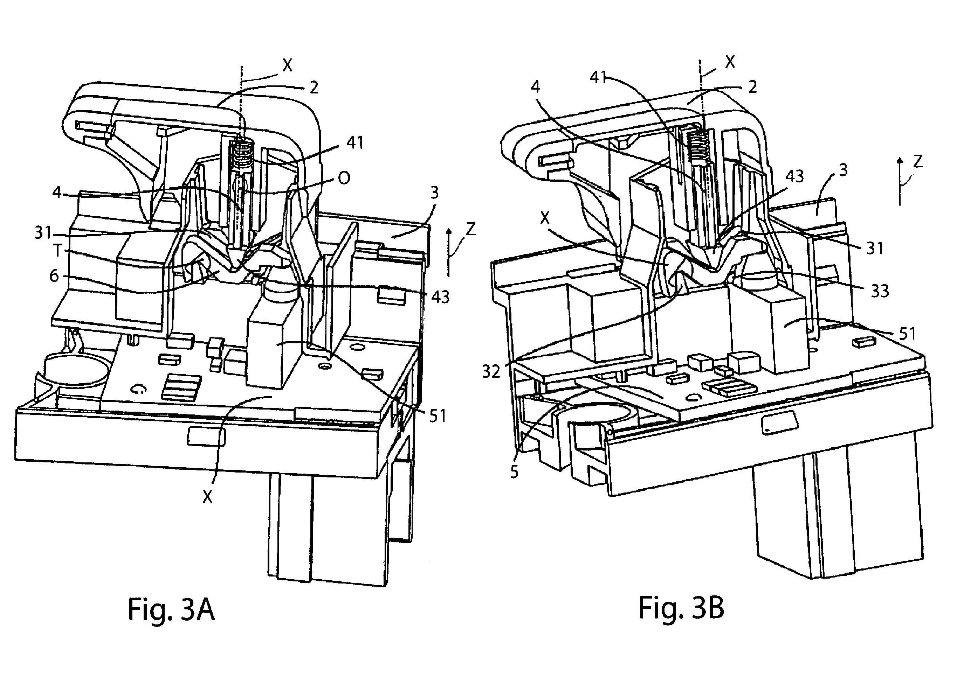

As shown in Figs. 3A and 3B, and as can be guessed by observing Fig. 2, said actuators 6 are positioned into as many suitable grooves, e.g. obtained on the sides of said flared structure, preferably arranged opposite to each other on each side in a manner such that, following the movement of key 2, only one actuator 6 intercepts rod 4. Each groove comprises a first support portion 32, on which actuator 6 is laid, and a second constraining portion 33 adapted to define the limit of rotation of actuator 6.

The first support portion 32 is such that it positions each actuator 6 at fulcrum "T" about which it rotates.

The dimensions of said second constraining portion 33 are such as to allow the third actuation portion of actuator 6 to press onto dome 511 so as to allow for the electric switching of push-button 51, as a function of the characteristics of contact dome 511 of push-button 51 in use.

The first support portion 32 and the second constraining portion 33 are suitably positioned in the grooves of housing structure 3 so that they can house respective actuators 6 opposite to each other.

For each actuator 6, the inclined portion near fulcrum "T" has substantially the same slope as contact plane 31 comprised in the flared structure of housing structure 3; moreover, the inclined plane near the actuation portion of actuator 6 is steeper than inclined contact plane 31.

As the contact portion 43 of rod 4 is sliding, such diversity of the planes' inclination allows said inclined plane of actuator 6 to be perceived before inclined contact plane 31 of the flared structure.

This inclination difference allows rod 4 to act upon actuator 6, which by rotating will press against contact dome 511 of associated push-button 51.

In the embodiment shown in the drawings, rod 4 is integral with key 2 to which it is secured.

Said key 2 comprises a guide 21 adapted to house a portion of said rod 4, thus allowing rod 4 itself to slide along axis "X" of key 2 when switching between the various operating configurations, countered by at least one elastic means 41, e.g. a coil spring.

The stroke of rod 4 inside guide 21 is delimited in one direction by the structure of elastic means 41 itself, and in the opposite direction, in agreement with the direction of the force applied by elastic means 41, by a stop portion 42 adapted to slide into a suitable groove present in guide 21, until it abuts against an end-of-stroke element.

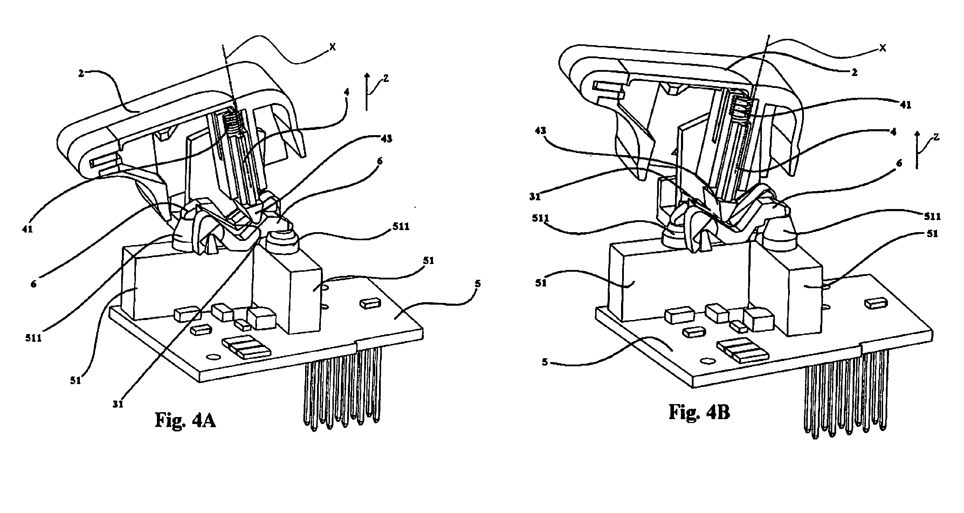

For the purposes of the present description, the following will disclose in detail the behaviour of the components of the switches according to the present invention, as shown by way of example in Figs. 4A and 4B.

In the idle operating configuration, axis "X" of key 2 is substantially parallel to axis "Z" of the switch because contact portion 43 of rod 4 is positioned in the lowest point of the flared portion of housing structure 3 and is held in that position, thereby avoiding any undesired vibration or movement, by the action exerted by elastic means 41 onto rod 4 itself and by the steeper inclined planes of actuator 6, which passively hold rod 4 in position.

When key 2 is operated in order to switch to the push configuration, it rotates about fulcrum "O" and drags along rod 4, which, countered by elastic means 41, slides on inclined contact plane 31.

Along its stroke, rod 4 intercepts the inclined plane of actuator 6, near the actuation portion of the same actuator 6, thereby causing it to rotate about respective fulcrum "T"; therefore actuator 6, as it descends, acts upon corresponding push-button 51 by compressing contact dome 511, thus causing the electric switching.

As soon as the user stops operating key 2, the rod slides in the opposite direction through the effect of elastic means 41, thus returning to the idle operating condition and releasing actuator 6.

Actuator 6, in its turn, is brought back to its initial position by contact dome 511, which, due to its elastic characteristics, will rise again and move actuator 6 back to its original position.

When key 2 is operated in order to switch to the pull configuration, the sequence is repeated in a specular fashion, this time involving actuator 6' and push-button 51'.

If the user holds rod 4 in either the push or pull configuration, rod 4 continues to act upon corresponding actuator 6 through contact portion 43, without causing any spurious switching of th push-button 51.

Each movement of key 2 corresponds to the movement of only one actuator 6 and of the associated push-button.

The present solution almost completely eliminates any criticality regarding push-button activation.

As aforementioned, the return movement of key 2 is obtained by means of elastic means 41, which brings actuator 6, corresponding to that direction, back into the initial condition, thus stopping the latter's action upon corresponding push-button 51 and allowing dome 511 to rise again.

In the present invention, the actuation stroke that acts upon push-button 51 is amplified through the effect of the ratio between lever arm push-button 51-fulcrum "T" and lever arm push-button 51-rod 4; furthermore, by changing the relative inclination of the inclined planes of actuator 6 and of housing structure 3, it is possible to optimize the points of action upon push-buttons 51.

Finally, the combined shape and position of the steeper inclined planes of actuator 6, of rod 4 and of the flared structure of structure 3, clearly visible in the annexed drawings, allow rod 4 itself to be passively held in position, thus reducing any vibration potentially detrimental to the switch.

## Claims

1. Control switch for a vehicular parking brake, comprising a key (2) secured to a housing structure (3), so that it can rotate about a fulcrum (O), a rod (4) secured to one end of the key (2) and moving integrally therewith, so that it can slide along an axis (X) of said key (2), countered by an elastic means (41);
said rod 4 comprises a contact portion (43), located at the free and thereof;
said housing structure (3), comprising at least one integral flared structure, being fixed onto an electronic circuit (5) comprising at least one electronic push-button (51);
said switch being **characterized in that** it comprises at least one actuator (6) positioned near said flared structure which comprises at least one inclined contact plane (31) on which said rod (4) slides; said at least one actuator (6) is positioned in order to be able to rotate about a fulcrum (T) by directly acting upon said push-button (51), following the direct action of the rod (4) upon said actuator (6), caused by the interception of the contact portion (43) on the actuator (6).

2. Switch according to claim 1, wherein said switch comprises two electric push-buttons (51), each comprising at least one contact dome (511), fixed onto the electronic circuit (5); two actuators (6 and 6') arranged parallel and opposite to each other; a flared structure comprising at least two inclined and mutually opposite contact planes (31), so as to create a symmetrical flared structure; suitable grooves arranged on the sides of said flared structure, in which said actuators (6) are positioned.

3. Switch according to claim 1, wherein each actuator (6) has a first support portion adapted to be positioned at the fulcrum (T) about which it rotates, a second flared portion, secured at one end to the first support portion and comprising two opposite inclined planes, a third actuation portion, connected to the second flared portion and adapted to act directly upon the push-button (51).

4. Switch according to claim 3, wherein at least one inclined plane comprised in the actuator (6) has a slope greater than the contact plane (31) of the flared portion.

5. Switch according to claims 2 and 3, wherein each groove comprises a first support portion (32) onto which the actuator (6) is placed next to the fulcrum (T) about which it rotates, and a second constraining portion (33) adapted to define the limit of rotation of the actuator (6);
said first support portion (32) and the second constraining portion (33) are appropriately positioned in the grooves of the housing structure (3), so as to house the respective actuators (6) in an opposite fashion.

6. Switch according to claim 1, wherein the key (2) comprises a guide (21) adapted to house a portion of said rod (4), while allowing the rod to slide along the axis (X) of the key (2), countered by at least one elastic means (41).

7. Switch according to the preceding claims, wherein the combined shape and position of the steeper inclined planes of the actuator (6), of the rod (4) and of the flared structure of the structure (3) allow the rod (4) itself to be passively held in position.

## Patentansprüche

1. Steuerschalter für eine Fahrzeugstandbremse, umfassend ein Schalterelement (2), die derart an einer Gehäusestruktur (3) befestigt ist, dass sie sich um einen Drehpunkt (0) drehen kann, eine Stange (4), die an einem Ende des Schalterelements (2) befestigt ist und sich mit dieser zusammen derart bewegt, dass sie entlang einer Achse (X) des Schalterelements (2) gleiten kann, und der ein elastisches Mittel (41) entgegenwirkt;
wobei die Stange (4) einen Kontaktabschnitt (43) umfasst, der sich an deren freiem Ende befindet;
wobei die Gehäusestruktur (3) mindestens eine integrierte, aufgeweitete Struktur umfasst, und an einer elektronischen Schaltung (5) befestigt ist, die mindestens einen elektronischen Druckschalter (51) umfasst;
wobei der Schalter **dadurch gekennzeichnet ist, dass** er mindestens ein Betätigungselement (6) umfasst, das nahe der aufgeweiteten Struktur befestigt ist, die mindestens eine schräge Kontaktebene (31) umfasst, auf der die Stange (4) gleitet, wobei das mindestens eine Betätigungselement (6) angeordnet ist, um in der Lage zu sein, sich, der direkten Betätigung des Betätigungselements (6) durch die Stange (4) folgend, was durch das Auftreffen des Kontaktabschnittes (43) auf das Betätigungselement (6) bewirkt wird, durch direktes Betätigen des Druckschalters (51) um einen Drehpunkt (T) zu drehen.

2. Schalter nach Anspruch 1, wobei der Schalter zwei elektrische Druckschalter (51) umfasst, die jeweils mindestens eine Kontaktkuppel (511) umfassen, die auf der elektronischen Schaltung (5) befestigt sind, zwei Betätigungselemente (6, 6'), die parallel und einander gegenüberliegend angeordnet sind, eine aufgeweitete Struktur, die mindestens zwei schräge und einander wechselseitig gegenüberliegende Kontaktebenen (31) umfasst, so dass eine symmetrische, aufgeweitete Struktur erzeugt ist, geeignete Rillen, die an den Seiten der aufgeweiteten Struktur angeordnet sind, in denen die Betätigungselemente (6) angeordnet sind.

3. Schalter nach Anspruch 1, wobei jedes Betätigungselement (6) einen ersten Stützabschnitt aufweist, der dafür eingerichtet ist, am Drehpunkt (T) angeordnet zu sein, um den es sich dreht, einen zweiten, aufgeweiteten Abschnitt, der an einem Ende des ersten Stützabschnitts befestigt ist und zwei sich gegenüberliegende schräge Ebenen umfasst, einen dritten Betätigungsabschnitt, der mit dem zweiten, aufgeweiteten Abschnitt verbunden und dafür eingerichtet ist, den Druckschalter (51) direkt zu betätigen.

4. Schalter nach Anspruch 3, wobei mindestens eine im Betätigungselement (6) enthaltene schräge Ebene eine Neigung aufweist, die größer als die Kontaktebene (31) des aufgeweiteten Abschnitts ist.

5. Schalter nach Anspruch 2 und 3, wobei jede Rille einen ersten Stützabschnitt (32) umfasst, auf dem das Betätigungselement (6) nahe dem Drehpunkt (T) angeordnet ist, um den es sich dreht, und einen zweiten, einschränkenden Abschnitt (33), der dafür eingerichtet ist, die Begrenzung der Drehung des Betätigungselements (6) zu definieren;
wobei der erste Stützabschnitt (32) und der zweite, einschränkende Abschnitt (33) in geeigneter Weise in den Rillen der Gehäusestruktur (3) angeordnet sind, so dass die entsprechenden Betätigungselemente (6) in gegenüberliegender Weise aufgenommen sind.

6. Schalter nach Anspruch 1, wobei die Taste (2) eine Führung (21) umfasst, die dafür eingerichtet ist, einen Abschnitt der Stange (4) aufzunehmen, während das Gleiten der Stange entlang der Achse (X) des Schalterelements (2) ermöglicht ist, dem mindestens ein elastisches Mittel (41) entgegenwirkt.

7. Schalter nach einem der vorhergehenden Ansprüche, wobei die kombinierte Form und Position der steileren geneigten Ebenen des Betätigungselements (6), der Stange (4) und der aufgeweiteten Struktur der Struktur (3) es ermöglichen, die Stange (4) selbst passiv in Position zu halten.

## Revendications

1. Interrupteur de commande pour un frein à main d'un véhicule comprenant une manette (2) fixée sur une structure de logement (3), de telle sorte qu'elle puisse effectuer une rotation autour d'un pivot (0), une tige (4) fixée sur une extrémité de la manette (2) et se déplaçant d'une seule pièce avec celle-ci, de telle sorte qu'elle puisse coulisser le long d'un axe (X) de ladite manette (2), en s'opposant à un moyen élastique (41) ;
ladite tige (4) comprenant une partie de contact (43), située au niveau de l'extrémité libre de celle-ci ; ladite structure de logement (3), comprenant au moins une structure évasée en une seule pièce, étant fixée sur un circuit électronique (5) comprenant au moins un bouton-poussoir (51) électronique ;
ledit interrupteur étant **caractérisé en ce qu'**il comprend au moins un actionneur (6) positionné à proximité de ladite structure évasée qui comprend au moins un plan de contact incliné (31) sur lequel coulisse ladite tige (4) ; ledit au moins un actionneur (6) est positionné afin d'être capable d'effectuer une rotation autour d'un pivot (T) en agissant directement sur ledit bouton-poussoir (51), en suivant l'action directe de la tige (4) sur ledit actionneur (6), provoquée par l'interception de la partie de contact (43) sur l'actionneur (6).

2. Interrupteur selon la revendication 1, dans lequel ledit interrupteur comprend deux boutons-poussoirs (51) électriques, chacun comprenant au moins un dôme de contact (511), fixé sur le circuit électronique (5) ; deux actionneurs (6 et 6') agencés parallèlement et en opposition l'un par rapport à l'autre ; une structure évasée comprenant au moins deux plans de contact inclinés et mutuellement opposés (31), de manière à créer une structure évasée symétrique ; des rainures adéquates agencées sur les côtés de ladite structure évasée, dans laquelle sont positionnés lesdits actionneurs (6).

3. Interrupteur selon la revendication 1, dans lequel chaque actionneur (6) présente une première partie de support conçue pour être positionnée au niveau du pivot (T) autour duquel il effectue une rotation, une deuxième partie évasée, fixée à une extrémité à la première partie de support et comprenant deux plans inclinés opposés, une troisième partie d'actionnement, raccordée à la deuxième partie évasée et conçue pour agir directement sur le bouton-poussoir (51).

4. Interrupteur selon la revendication 3, dans lequel au moins un plan incliné agencé dans l'actionneur (6) présente une pente supérieure au plan de contact (31) de la partie évasée.

5. Interrupteur selon les revendications 2 et 3, dans lequel chaque rainure comprend une première partie de support (32) sur laquelle l'actionneur (6) est placé à proximité du pivot (T) autour duquel il effectue une rotation, et une deuxième partie contraignante (33) configurée pour définir la limite de la rotation de l'actionneur (6) ;
- ladite première partie de support (32) et la deuxième partie contraignante (33) sont positionnées de manière appropriée dans les rainures de la structure de logement (3) de manière à abriter les actionneurs respectifs (6) en opposition l'un par rapport à l'autre.

6. Interrupteur selon la revendication 1, dans lequel la manette (2) comprend un guide (21) configuré pour abriter une partie de ladite tige (4), tout en permettant à la tige de coulisser le long de l'axe (X) de la manette (2), en s'opposant à au moins un moyen élastique (41).

7. Interrupteur selon les revendications précédentes, dans lequel la forme et la position combinées des plans inclinés de manière plus forte de l'actionneur (6), de la tige (4) et de la structure évasée de la structure (3) permettent que la tige (4) elle-même soit maintenue passivement en position.
